## Europäisches Patentamt
## European Patent Office
## Office européen des brevets

(11) Numéro de publication : **0 031 756**
**B1**

(12)

# FASCICULE DE BREVET EUROPÉEN

(45) Date de publication du fascicule du brevet :
**05.10.83**

(51) Int. Cl.³ : **B 29 D 12/02**

(21) Numéro de dépôt : **80401800.0**

(22) Date de dépôt : **15.12.80**

(54) **Fausse lentille pour moulage en forme du face d'une monture de lunettes, et moule correspondant.**

(30) Priorité : **28.12.79 FR 7931919**

(43) Date de publication de la demande :
**08.07.81 Bulletin 81/27**

(45) Mention de la délivrance du brevet :
**05.10.83 Bulletin 83/40**

(84) Etats contractants désignés :
**AT CH DE GB IT LI**

(56) Documents cités :
**FR A 1 332 122**
**FR A 2 219 831**
**FR A 2 374 148**
**GB A 436 421**
**GB A 565 161**
**GB A 1 083 856**

(73) Titulaire : **ESSILOR INTERNATIONAL Cie Générale d'Optique**
**1 Rue Thomas Edison Echat 902**
**F-94028 Cretell Cedex (FR)**

(72) Inventeur : **Laprade, Gérard**
**20bis, Rue de la Ferme**
**F-94100 Saint Maur (FR)**
Inventeur : **Marouby, Jean-Pierre**
**11, Rue de Savole**
**F-93000 Boblgny (FR)**
Inventeur : **Bertln, Charly**
**9, Rue Vaudetard**
**F-92130 Issy-Les-Moulineaux (FR)**

(74) Mandataire : **CABINET BONNET-THIRION**
**95 Boulevard Beaumarchals**
**F-75003 Parls (FR)**

Jouve, 18, rue St-Denis, 75001 Paris, France

Fausse lentille pour moulage en forme du face d'une monture de lunettes, et moule correspondant

La présente invention concerne d'une manière générale le moulage en forme de faces pour montures de lunettes.

Ainsi qu'on le sait, une monture de lunettes se compose, d'une part, d'un face, comportant deux cercles ou entourages réunis par un pontet médian et propres chacun à recevoir une lentille ophtalmique, et d'autre part, deux branches articulées audit face, celui-ci comportant à cet effet, du côté temporal, deux épaississements ou tenons propres à l'implantation de charnons.

Lorsqu'il est en matière organique dite plastique, le face peut être réalisé par usinage d'une plaquette en une telle matière.

Mais il s'agit là d'un procédé de réalisation relativement industrieux et onéreux.

De manière avantageuse, le face peut également être réalisé par moulage en forme de la matière organique à mettre en œuvre.

Par moulage en forme, on entend ici un moulage conduisant directement à la configuration définitive recherchée pour le face concerné et évitant donc toute reprise d'usinage pour ce face.

De manière usuelle, un tel moulage en forme est assuré par mise en œuvre d'un moule comportant, d'une part, deux demi-moules propres à définir entre eux deux canaux annulaires de cercle, qui sont reliés l'un à l'autre par un canal médian de pontet, et qui bordent chacun deux plateaux, un par demi-moule, et d'autre part, deux fausses lentilles, une par canal annulaire de cercle, propres chacune à venir en appui sur les plateaux correspondants desdits demi-moules.

Ces fausses lentilles sont nécessaires pour la formation sur les cercles recherchés de drageoirs propres à l'engagement de lentilles ophtalmiques, faute de quoi de tels drageoirs devraient être réalisés après moulage, par usinage.

En pratique, chaque fausse lentille ainsi mise en œuvre à ce jour se réduit à un simple voile dont la périphérie présente annulairement une arête propre à la formation d'un drageoir.

Par voile, on entend ici une pièce dont les dimensions s'étendent essentiellement dans deux directions, l'épaisseur de cette pièce dans une troisième direction perpendiculaire aux précédentes étant réduite, et se limitant, en l'espèce, à la largeur du drageoir à former. Une fausse lentille ainsi réduite à un simple voile se trouve notamment décrite dans le brevet FR-A-2 374 148.

Lors du moulage, chaque fausse lentille trouve un appui sur les plateaux correspondants des demi-moules mis en œuvre, le plateau d'un premier de ces demi-moules pour une première de ses faces, et le plateau de l'autre de ces demi-moules pour l'autre de ses faces.

Au démoulage, les fausses lentilles, qui sont retenues dans les cercles ou entourages formés, sont retirées de ceux-ci par déformation élastique de la matière correspondante.

Bien qu'un tel procédé de moulage en forme ait donné et donne encore satisfaction, il implique par lui-même des contraintes de fabrication conduisant à des limitations de configuration pour les faces obtenus.

Ces contraintes de fabrication sont dues à ce que, sur la surface arrière du face à former, se trouvent en saillie, du côté temporal, des épaississements locaux formant tenons, et, éventuellement, du côté nasal, des épaississements locaux formant plaquettes nasales.

De ces épaississements locaux ainsi en saillie sur cette surface arrière, il résulte en effet que les plateaux que présente la demi-moule concerné, celui correspondant à la surface arrière du face à former, pour l'appui des fausses lentilles sont nécessairement, à ce jour, au moins localement, au droit desdits épaississements, à une hauteur notable vis-à-vis du plan de joint des demi-moules.

Compte tenu de la dépouille nécessaire au démoulage, le bord interne des tenons se trouve, donc, du côté temporal, progressivement décalé vers l'extérieur à compter des cercles ou entourages.

Or, un tel tenon doit impérativement présenter une épaisseur minimale, nécessaire à l'implantation d'un charnon.

Par suite, le bord externe de ces tenons se trouve lui aussi progressivement déporté vers l'extérieur, à raison du déport de son bord interne.

Ainsi, les tenons des faces de montures de lunettes réalisés par moulage en forme font inévitablement, les conditions étant égales par ailleurs, largement saillie vers l'extérieur, ce qui n'est pas sans alourdir la configuration générale de tels faces.

De même, du côté nasal, la dépouille nécessaire au démoulage conduit à un rétrécissement d'ensemble de la largeur globale disponible pour le pontet et les plaquettes nasales, ce qui ne manque pas de soulever quelques difficultés de confort et d'adaptation lorsqu'un tel face est destiné à un individu dont la racine du nez est relativement large.

La présente invention a d'une manière générale pour objet une disposition de nature à au moins minimiser ces inconvénients, voire même à les annuler.

De manière plus précise, elle a tout d'abord pour objet une fausse lentille pour moule propre au moulage en forme du face d'une monture de lunettes, du genre formant un voile dont la périphérie présente annulairement une arête propre à la formation d'un drageoir, cette fausse lentille étant caractérisée en ce qu'elle présente en saillie sur l'une des faces dudit voile, et en retrait par rapport à la périphérie de celui-ci, un prolongement dont l'extrémité libre au moins a une allure globalement tronconique, sa section allant en décroissant en s'éloignant du voile ; elle a encore pour objet un moule propre à la mise en œuvre de

fausses lentilles de ce type.

Quoi qu'il en soit, du fait que la fausse lentille suivant l'invention présente un prolongement, la hauteur, du côté temporal et du côté nasal, vis-à-vis du plan de joint des demi-moules, des plateaux que présente, pour l'appui des fausses lentilles, celui de ces demi-moules destiné à la formation de la surface arrière d'un face, se trouve avantageusement réduite d'autant, en sorte que les conséquences de la dépouille nécessaire au démoulage sur le déport vers l'extérieur des tenons formés, ainsi que sur la réduction de la largeur disponible pour le pontet médian et les plaquettes nasales, se trouvent minimisées en correspondance.

Autrement dit, les conditions étant égales par ailleurs, la mise en œuvre de fausses lentilles selon l'invention permet un rapprochement vers l'intérieur de ces tenons et donc une réduction de la saillie extérieure de ceux-ci, et/ou une augmentation de l'écart angulaire, communément dit angle de chasse entre les plaquettes nasales.

De la réduction de la saillie extérieure des tenons, il résulte avantageusement une amélioration de l'esthétique d'ensemble des faces obtenus, qui, sans aucune retouche d'usinage après moulage, peuvent présenter une ligne notablement plus fine que celle des faces obtenus antérieurement.

De même, de l'augmentation de l'angle de chasse entre les plaquettes nasales, il résulte avantageusement, par une meilleure adaptation, une amélioration du confort de l'usager, notamment lorsqu'il s'agit d'un usager présentant un nez épaté.

Par ailleurs, le prolongement que présente une fausse lentille suivant l'invention permet, si désiré, de s'affranchir des plots usuellement mis en œuvre pour le centrage d'une telle fausse lentille vis-à-vis des demi-moules qu'elle doit équiper, ledit prolongement pouvant assurer par lui-même directement un tel centrage, par engagement dans celui desdits demi-moules qui correspond à la surface arrière du face à former.

Les caractéristiques et avantages de l'invention ressortiront d'ailleurs de la description qui va suivre, à titre d'exemple, en référence aux dessins schématiques annexés sur lesquels :

la figure 1 est une vue en perspective d'une fausse lentille du type de celles connues à ce jour ;

la figure 2 est une vue en coupe de cette fausse lentille suivant la ligne II-II de la figure 1 ;

les figures 3 et 4 sont des vues respectivement analogues à celles des figures 1 et 2 pour une fausse lentille selon l'invention ;

la figure 5 est une vue en coupe longitudinale d'un moule comportant des fausses lentilles suivant l'invention, suivant la ligne V-V de la figure 6 ;

la figure 6 en est une vue en coupe transversale, suivant la ligne VI-VI de la figure 5 ;

la figure 7 reprend, à échelle supérieure, le détail de la figure 6 repéré par un encart VII sur celle-ci ;

la figure 8 est, à l'échelle de la figure 7, une vue transversale en coupe du face obtenu à l'aide d'un tel moule ;

la figure 9 est, à titre de comparaison, et à la même échelle que la figure 8, une vue en coupe d'un face obtenu à l'aide d'un moule comportant des fausses lentilles du type de celle représentée sur les figures 1 et 2.

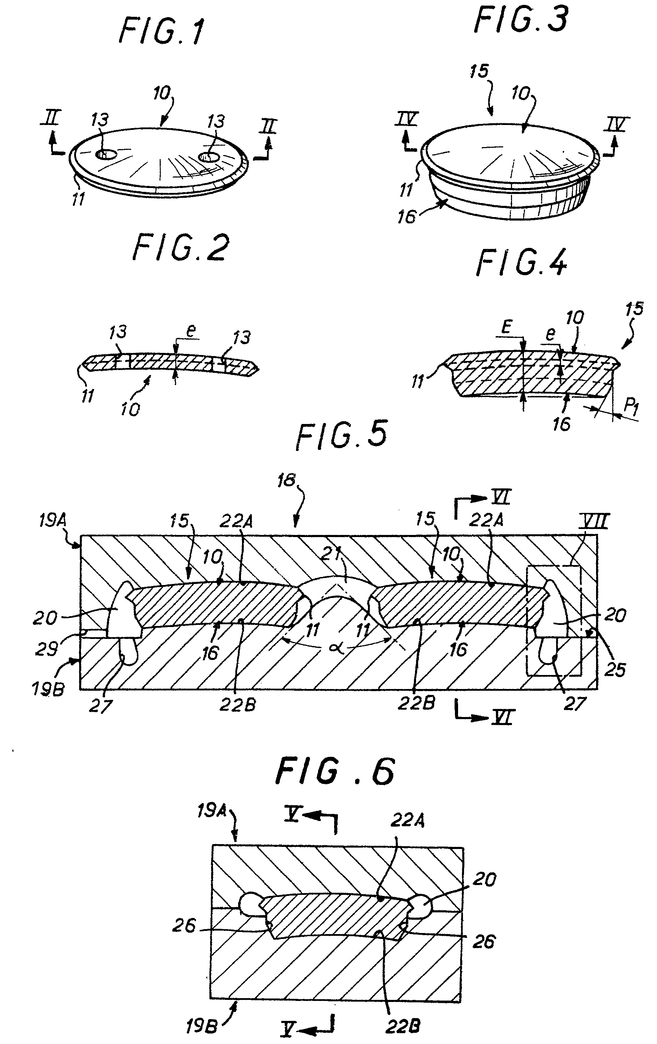

Sur les figures 1 et 2 on reconnaît une fausse lentille 10 du type de celles usuellement mises en œuvre à ce jour dans les moules propres au moulage en forme d'une monture de lunettes.

Une telle fausse lentille 10 se réduit, en pratique, à un simple voile, dont le contour correspond à celui des cercles ou entourages du face à former, et dont la périphérie présente annulairement une arête 11 propre à la formation d'un drageoir sur un tel cercle ou entourage.

Un tel voile est d'épaisseur $e$ relativement faible, limitée en pratique à la largeur du drageoir à former.

En pratique, et tel que représenté, ce voile est globalement bombé, comme les cercles ou entourages à former.

Ainsi qu'il est usuel, une telle fausse lentille 10 est percée de deux trous 13, pour passage de plots de centrage, comme il sera détaillé ci-après.

Tel que représenté sur les figures 3 et 4, une fausse lentille 15 suivant l'invention présente non seulement un voile 10, à arête périphérique 11, du type de celui décrit en référence aux figures 1 et 2, mais encore, en saillie sur l'une des faces de ce voile 10, et en retrait par rapport à la périphérie de celui-ci, un prolongement 16 ; l'ensemble a une épaisseur $E$, qui est un multiple, entier ou fractionnaire, de l'épaisseur $e$ du seul voile 10.

Dans la forme de réalisation représentée, ce prolongement 16 est d'un seul tenant avec le voile 10 qu'il affecte et s'étend à compter de la face concave de celui-ci.

Sur une partie au moins de sa hauteur, à compter du voile 10, il est par exemple cylindrique, tel que représenté.

Mais, de préférence, et tel qu'également représenté, son extrémité libre au moins a une allure globalement tronconique, sa section allant en décroissant en s'éloignant du voile 10, et il présente donc une pente de dépouille P1 à ladite extrémité.

De manière connue en soi, et tel que représenté à la figure 5, le moule 18 propre à la mise en œuvre de fausses lentilles 15 suivant l'invention comporte, outre deux de telles fausses lentilles 15, deux demi-moules 19A, 19B propres à définir entre eux deux canaux annulaires de cercle 20, qui sont reliés l'un à l'autre par un canal médian de pontet 21, et qui bordent chacun deux plateaux 22A, 22B, un par demi-moule, pour appui de la fausse lentille 15 correspondante, étant entendu qu'il y a une fausse lentille 15 par canal annulaire de cercle 20.

Les demi-moules 19A, 19B sont affrontés l'un à l'autre, par une surface de joint (non représentée en détail sur les figures) formant localement, dans l'exemple de réalisation représenté, une surface de référence plane 25, aux extrémités longitudinales desdits demi-moules.

Pour leur centrage, les fausses lentilles 15 suivant l'invention sont directement ancrées par leur prolongement 16 dans le demi-moule 19B, celui destiné à former la surface arrière du face à obtenir, les plateaux dudit demi-moule 19B étant, latéralement, en retrait vis-à-vis des canaux annulaires de cercle 20, figure 6, ce dont il résulte, latéralement, la présence de murailles 27 propres à un tel centrage.

Du côté temporal, les canaux annulaires de cercle 20 présentent localement un élargissement apte à donner naissance à un tenon en saillie tant latéralement que vers l'arrière sur le face à obtenir, et ils communiquent avec des cavités 27 qui, prévues sur le demi-moule 19B, sont aptes à recevoir des inserts formant charnons.

De même, du côté nasal, les canaux annulaires de cercle 20 présentent localement un élargissement propre à former des plaquettes nasales en saillie vers l'arrière.

Enfin, à l'une des extrémités longitudinales des demi-moules 19A, 19B, débouche un conduit de remplissage 29 propre à l'introduction de la matière organique à mouler.

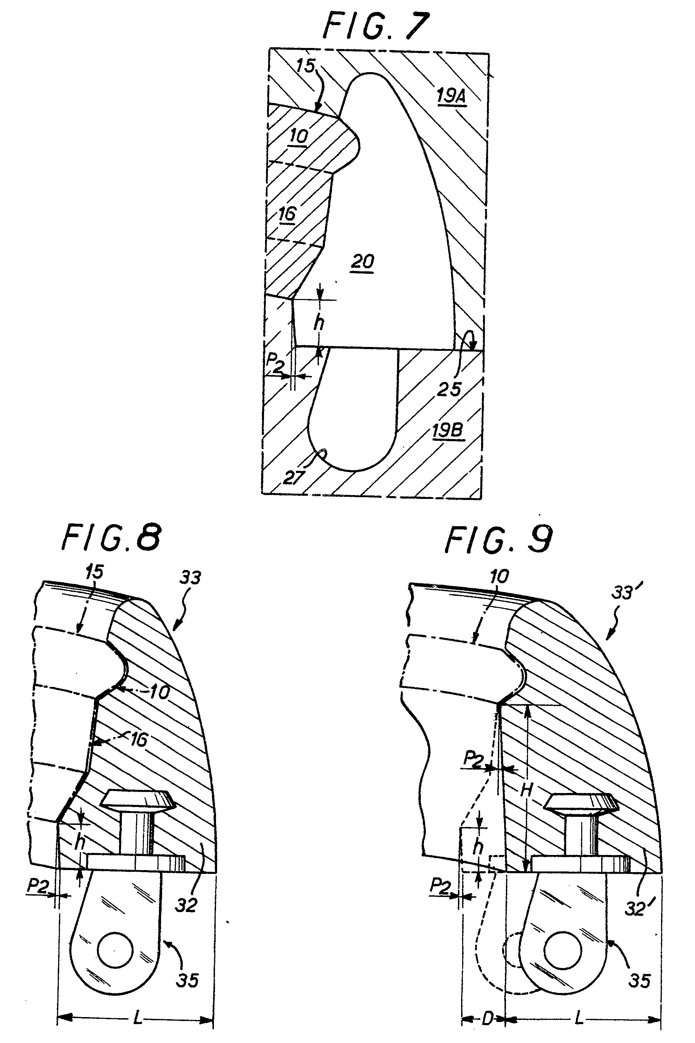

Suivant l'invention, et en raison du prolongement 16 des fausses lentilles 15, les plateaux 22B du demi-moule 19B sont, du côté temporal et vis-à-vis de la partie plane 25 de la surface de joint, prise comme surface de référence, à une hauteur réduite *h*, figure 7.

Cette hauteur *h* peut être positive, comme c'est le cas du côté temporal dans l'exemple de réalisation représenté ; elle peut également être nulle, comme c'est le cas du côté nasal dans cet exemple ; mais elle peut aussi être négative, dans le cas où le prolongement 16 des fausses lentilles 15 est plus accentué et pénètre de ce fait dans une cavité du demi-moule 19B, tant latéralement, entre les murailles 26, que longitudinalement, du côté temporal et/ou du côté nasal.

Quoi qu'il en soit, c'est sur cette seule hauteur *h* qu'intervient la dépouille P2 nécessaire au démoulage, figures 7 à 9.

Les effets de cette dépouille P2 sur le déport vers l'extérieur des tenons 32 formés sur le face 33 obtenu, se trouvent minimisés à raison de la hauteur *h*, elle-même minime, des plateaux 22B à cet endroit, figures 7 et 8, cette dépouille n'affectant qu'une même hauteur *h* de tels tenons 32.

Pour illustrer les avantages de l'invention à cet égard, il a été représenté en traits pleins à la figure 9 un face 33′ obtenu avec mise en œuvre de fausses lentilles 15, représentées en traits interrompus, pour lequel les effets de la dépouille P2 interviennent sur une plus grande hauteur H du tenon 32′ correspondant, et sont donc plus importants, et, en tirets, sur cette même figure, à titre de comparaison, le tenon 32 obtenu, les conditions étant égales par ailleurs, suivant l'invention.

Il ressort clairement de cette figure 9 que la mise en œuvre de fausses lentilles 15 suivant l'invention, représentées en traits interrompus à la figure 8, permet avantageusement un déport vers l'intérieur D du bord interne du tenon 32, donc, à largeur de tenon L donnée propre à l'implantation d'un insert 35 formant charnon, une réduction de la saillie que forme à l'extérieur un tel tenon, cet avantage se trouvant accentué par la configuration tronconique de l'extrémité libre du prolongement 16 des fausses lentilles 15.

Un avantage semblable se retrouve du côté nasal, où l'écart angulaire α entre les plaquettes nasales formées, ou angle de chasse se trouve avantageusement augmenté.

Par ailleurs, et ainsi qu'on l'aura compris, le fait que, dans l'exemple de réalisation représenté, le prolongement 16 d'une fausse lentille 15 suivant l'invention soit d'abord cylindrique, autorise, comme il est usuel, la mise en place, sur le face obtenu, de lentilles ophtalmiques dont le bord, indépendamment d'une arête annulaire nécessaire à son emboîtement dans le drageoir correspondant, est globalement cylindrique, comme c'est en pratique le cas pour les lentilles ophtalmiques de forte puissance.

Bien entendu, la présente invention ne se limite cependant pas à la forme de mise en œuvre décrite et représentée.

En particulier, les fausses lentilles selon l'invention peuvent être en deux parties convenablement superposées, voile d'une part, et prolongement d'autre part, pourvu que ces deux parties soient convenablement ajustées l'une à l'autre.

En outre, et bien que cette disposition soit favorable aux effets recherchés, il n'est pas impératif que l'extrémité libre au moins du prolongement de la fausse lentille selon l'invention soit tronconique, ou, en tout cas, il n'est pas indispensable que la dépouille que présente ainsi un tel prolongement à son extrémité libre affecte annulairement l'ensemble de celui-ci.

Il pourrait suffire, en effet, que cette dépouille n'intervienne que localement, du côté temporal, pour les tenons à former, et/ou du côté nasal, pour les plaquettes nasales également à former.

**Revendications**

1. Fausse lentille pour moule propre au moulage en forme du face d'une monture de lunettes, du genre formant un voile (10) dont la périphérie présente annulairement une arête (11) propre à la formation d'un drageoir, caractérisée en ce qu'elle présente, en saillie sur l'une des faces dudit voile (10), et en retrait par rapport à la périphérie de celui-ci, un prolongement (16) dont l'extrémité libre au moins a une allure globalement tronconique, sa section allant en décroissant en s'éloignant du voile (10).

2. Fausse lentille suivant la revendication 1, caractérisée en ce que, au moins localement, son prolongement (16) présente, à proximité de son extrémité libre, une dépouille (P1).

3. Fausse lentille suivant l'une quelconque des revendications 1, 2, dans laquelle le voile (10) est bombé, caractérisée en ce que son prolongement (16) fait saillie sur la face concave dudit voile (10).

4. Fausse lentille suivant l'une quelconque des revendications 1 à 3, caractérisée en ce que son épaisseur d'ensemble (E) est un multiple entier ou fractionnaire de celle (e) du voile (10) qu'elle comporte.

5. Moule propre au moulage en forme du face d'une monture de lunettes, du genre comportant d'une part deux demi-moules (19A, 19B) propres à définir entre eux deux canaux annulaires de cercle (20) qui sont reliés l'un à l'autre par un canal médian de pontet (21), et qui bordent chacun deux plateaux (22A, 22B), un par demi-moule, et, d'autre part, deux fausses lentilles (15), une par canal annulaire de cercle (20), propres chacune à venir en appui sur les plateaux (22A, 22B) correspondants, caractérisé en ce que chacune desdites fausses lentilles (15) est conforme à l'une quelconque des revendications 1 à 4.

**Claims**

1. Dummy lens for a mould for casting the front of a spectacles frame, to the kind forming a disc (10) whose periphery annularly having a ridge (11) for the formation of a groove, characterised in that the lens has a projection (16) protruding on one of the faces of the said disc (10) and set back relative to the periphery thereof, at least the free end of the projection having a generally frusto-conical form, its section tapering away from the disc (10).

2. Dummy lens according to claim 1, characterised in that at least locally its projection (16) has a draft (P1) in the proximity of its free end.

3. Dummy lens according to any one of claims 1 to 2, in which the disc (10) is dished, characterised in that the projection (16) protrudes from the concave face of the said disc (10).

4. Dummy lens according to any one of claims 1 to 3, characterised in that its overall thickness (E) is an interger or fractional multiple of the thickness (E) of the disc (10) which it comprises.

5. Mould for casting in shape the front of a spectacles frame, of the kind comprising on the one hand two mould halves (19A, 19B) for defining between themselves two annular circular channels (20) which are connected to each other by a medial bridge canal (21), and each of which borders two plateaus (22A, 22B), one per mould half and, on the other hand, two dummy lenses (15), one per circular annular canal (20), each adapted to come into bearing engagement on the corresponding plateaus (22A, 22B), characterised in that each of the said dummy lenses (15) is in conformity with any one of claims 1 to 4.

**Ansprüche**

1. Linsenkörper für eine zum Formgießen des Stirnteils von Brillengestellen geeignete Gußform mit einer Schale (10), deren Umfang ringförmig eine Kante (11) aufweist, die zur Formung eines Büchsenrandes geeignet ist, gekennzeichnet durch einen Fortsatz (16), der gegenüber einer der Flächen der Schale (10) vorspringt und in bezug auf deren Umfang zurückversetzt ist und zumindest dessen freies Ende einen im allgemeinen kegelstumpfförmigen Verlauf aufweist, dessen Querschnitt mit zunehmendem Abstand von der Schale (10) abnimmt.

2. Linsenkörper nach Anspruch 1, dadurch gekennzeichnet, daß der Fortsatz (16) zumindest örtlich in der Nähe seines freien Endes eine Ausformungsschräge (P1) aufweist.

3. Linsenkörper nach Anspruch 1 oder 2, dessen Schale (10) gewölbt bzw. bauchig ausgebildet ist, dadurch gekennzeichnet, daß der Fortsatz (16) über die konkave Fläche der Schale (10) vorspringt.

4. Linsenkörper nach einem der Ansprüche 1 bis 3, dadurch gekennzeichnet, daß seine Gesamtdicke (E) ein ganzes oder gebrochenes Vielfaches der Dicke (e) der Schale (10), die er umfaßt, beträgt.

5. Zum Formgießen des Stirnteils von Brillengestellen geeignete Gußform einerseits mit zwei Formhälften (19A, 19B), die zwischen sich zwei kreisringförmige Kanäle (20) begrenzen, welche miteinander durch einen Mittelbügelkanal (21) verbunden sind, und die jeweils zwei Plateaux (22A, 22B), eines pro Formhälfte, begrenzen, und andererseits mit zwei Linsenkörper (15), einem pro kreisringförmigen Kanal (20), von denen jeder auf den entsprechenden Plateaux (22A, 22B) zur Abstützung kommt, dadurch gekennzeichnet, daß jeder der Linsenkörper (15) einem der Linsenkörper nach den Ansprüchen 1 bis 4 entspricht.

FIG.1

FIG.3

FIG.2

FIG.4

FIG.5

FIG.6

## FIG. 7

## FIG. 8

## FIG. 9